# EUROPÄISCHE PATENTSCHRIFT

(11) **EP 1 209 020 B1**
(45) Veröffentlichungstag und Bekanntmachung des Hinweises auf die Patenterteilung: **20.10.2004**
(21) Anmeldenummer: 00125876.3
(22) Anmeldetag: 25.11.2000
(51) Int. Cl.: B60K 41/14, F16H 59/16

(54) **Wirkungsgradverbesserung bei CVT Getrieben durch Schlupfvermeidung erreicht durch Drehmomentkontrolle mittels einer elektrischen Maschine**
CVT efficiency increase through slip reduction obtained by controlling the torque with an electrical machine
Augmentation du rendement d'une CVT par réduction du glissement obtenu par contrôle du couple avec une machine électrique

(43) Veröffentlichungstag der Anmeldung: 29.05.2002
(73) Patentinhaber: Ford Global Technologies, Inc., A subsidiary of Ford Motor Company, Dearborn, Michigan 48126 (US)
(72) Erfinder: Kok, Daniel Benjamin, 6343 CA Klimmen (NL)
(74) Vertreter: Drömer, Hans-Carsten, Dr.-Ing.

(56) Entgegenhaltungen:
- EP-A- 0 759 518
- EP-A- 0 788 914
- DE-A- 19 712 451
- US-A- 4 631 043
- US-A- 4 716 788

## Beschreibung

Die Erfindung betrifft eine Antriebsanordnung für ein Kraftfahrzeug, enthaltend einen Verbrennungsmotor sowie ein im Kraftübertragungsweg vom Verbrennungsmotor zu den Rädern angeordnetes stufenloses Getriebe. Ferner betrifft die Erfindung ein Verfahren zur Unterdrückung des Schlupfes im stufenlosen Getriebe der Antriebsanordnung eines Kraftfahrzeugs bei Auftreten eines Belastungsstoßes.

Stufenlose Getriebe, welche im Kraftübertragungsweg zwischen einem Verbrennungsmotor und den vom Motor angetriebenen Rädern eingesetzt werden, sind in verschieden Ausgestaltungen bekannt. So können solche Getriebe vom Riemen-Riemenscheiben-Typ, vom Reibrollen-Typ (toroidal) oder dergleichen sein. Im Folgenden wird stellvertretend ein stufenloses Getriebe vom Riementyp betrachtet.

Bei einem derartigen Getriebe ist ein zur Innenseite hin keilförmig zulaufender Riemen endlos umlaufend von einer antreibenden zu einer angetriebenen Riemenscheibe geführt. Die Riemenscheiben bestehen jeweils aus zwei einander mit den spitzen Enden zugewandten Kegelstümpfen, deren axialer Abstand veränderbar ist. Je nach axialem Abstand der Kegelstümpfe liegt der Riemen in einem unterschiedlichen radialen Abstand von der Drehachse der entsprechenden Riemenscheibe auf. Durch die Einstellung des axialen Abstandes der Kegelstümpfe kann somit der wirksame Radius und damit das Übersetzungsverhältnis der beiden gekoppelten Riemenscheiben stufenlos eingestellt werden.

Die Kraftübertragung zwischen einer Riemenscheibe und dem aufgelegten Riemen erfolgt im Wesentlichen kraftschlüssig, d.h. durch Haftreibung. Daher muss durch einen entsprechend hohen Anpressdruck zwischen Riemen und Riemenscheibe sichergestellt werden, dass zu jedem Zeitpunkt die Reibung größer als die auftretenden Kraftbelastungen ist, so dass es nicht zu einem unerwünschten Schlupf zwischen Riemenscheibe und Riemen kommen kann. Um diese Voraussetzung auch bei Belastungsstößen, die zum Beispiel beim Überfahren eines stufenförmigen Hindernisses auftreten, zu gewährleisten, muss der Anpressdruck mit einem entsprechenden Sicherheitsfaktor hoch genug ausgelegt werden. Dies führt jedoch dazu, dass der Anpressdruck während des überwiegend stattfindenden regulären Betriebs eigentlich zu groß ist, was wiederum unnötige Effizienz- und Reibungsverluste zur Folge hat.

Aus der gattungsbildenden US 4 631 043 ist eine Antriebsanordnung für ein Kraftfahrzeug bekannt, welche ein stufenloses Getriebe vom Riemen-Riemenscheiben-Typ aufweist. Die Anordnung enthält Sensoren zur Erfassung der Drehzahl und des Drehmomentes an der Eingangsseite sowie an der Ausgangsseite des Getriebes. Durch einen Vergleich der mit diesen Sensoren erfassten Größen kann festgestellt werden, ob im Getriebe ein Schlupf bei der Übertragung des antriebsseitigen Drehmomentes auftritt. Falls dies der Fall ist, wird die Klemmkraft der Riemenscheiben auf einen Wert erhöht, bei welchem der Schlupf beseitigt ist.

In ähnlicher Weise wird auch bei einem System gemäß der DE 197 12 451 A1 ein Schlupf in einem stufenlosen Getriebe von Erfassungsmitteln erkannt und anschließend durch entsprechende Gegenmaßnahmen beseitigt. Die vorausschauende Kompensation eines einmaligen Belastungsstoßes ist jedoch nicht möglich.

Vor diesem Hintergrund war es Aufgabe der vorliegenden Erfindung, eine Antriebsanordnung und ein Verfahren zur Verfügung zu stellen, durch die bei verbessertem Fahrverhalten und einer besseren Energiebilanz das Auftreten eines Schlupfes bei Belastungsstößen an einem stufenlosen Getriebe verhindert werden kann.

Diese Aufgabe wird durch eine Antriebsanordnung mit den Merkmalen des Anspruchs 1 sowie durch ein Verfahren mit den Merkmalen des Anspruchs 5 gelöst. Vorteilhafte Ausgestaltungen sind in den Unteransprüchen enthalten.

Die Antriebsanordnung für ein Kraftfahrzeug enthält demnach einen Verbrennungsmotor sowie ein stufenloses Getriebe, welches im Kraftübertragungsweg vom Verbrennungsmotor zu den angetriebenen Rädern angeordnet ist. Die Antriebsanordnung ist dadurch gekennzeichnet, dass es einen Drehmomentregler enthält, welcher eingangsseitig mit mindestens einem Sensor zur Erfassung von Belastungsstößen verbunden ist. Der Sensor ist dabei vorzugsweise im Kraftübertragungsweg zwischen dem stufenlosen Getriebe und den angetriebenen Rädern des Kraftfahrzeugs angeordnet. Weiterhin ist der Drehmomentregler so eingerichtet, dass er bei Detektion eines Belastungsstoßes Mittel zur Verhinderung eines Schlupfes in dem stufenlosen Getriebe so ansteuert, dass der Belastungsstoß zu keinem Schlupf im stufenlosen Getriebe führt.

Die erfindungsgemäße Antriebsanordnung beruht demnach darauf, dass über geeignete Sensoren ein auftretender Belastungsstoß frühzeitig erkannt und von einem Drehmomentregler unmittelbar hierauf reagiert wird. Bevor der Belastungsstoß somit am stufenlosen Getriebe zur Wirkung kommt und dort unter Umständen einen Schlupf hervorrufen kann, sind geeignete Gegenmaßnahmen vom Drehmomentregler eingeleitet worden, die das Auftreten eines solchen unerwünschten Schlupfes verhindern.

Das Abfangen der Belastungsstöße ermöglicht es, dass am stufenlosen Getriebe die dort herrschenden Reibungskräfte für die Bedingungen des normalen Betriebs ausgelegt werden können. Sie müssen somit nicht für den potentiellen Belastungsstoß überhöht dimensioniert werden, da ein solcher Belastungsstoß im Falle seines Auftretens anderweitig kompensiert wird. Die Möglichkeit, das stufenlose Getriebe optimal auf den zeitlich weitaus überwiegenden normalen Belastungszustand einstellen zu können, führt dabei zu einem wesentlich effizienteren Betrieb des stufenlosen Getriebes.

Die Mittel zur Verhinderung des Schlupfes im stufenlosen Getriebe können verschiedenartig ausgestaltet sein. Vorzugsweise handelt es sich bei den Mitteln um eine Lichtmaschine sowie eine elektrische Ansteuerung für die Lichtmaschine, mit deren Hilfe die Lichtmaschine vorübergehend als Elektromotor zur Kraft- beziehungsweise Drehmomenterzeugung verwendet werden kann. Wenn somit auf der Ausgangsseite des stufenlosen Getriebes ein extern aufgeprägter Belastungsstoß detektiert wird, kann durch eine entsprechende Ansteuerung der Lichtmaschine ein kompensierendes Drehmoment erzeugt werden. Im Ergebnis hat der Belastungsstoß daher keine Auswirkungen auf das stufenlose Getriebe, insbesondere stellt sich dort kein Schlupf ein.

Die Lichtmaschine kann bei der erläuterten Anordnung insbesondere eingangsseitig des stufenlosen Getriebes, das heißt zwischen dem Verbrennungsmotor und dem stufenlosen Getriebe angeordnet sein. Sie kann an dieser Stelle einen "Entlastungsstoß" erzeugen, der den ausgangsseitig des Getriebes detektierten Belastungsstoß in seiner Wirkung auf das Getriebe kompensiert.

Ein anderes denkbares Mittel zur Verhinderung eines Schlupfes im stufenlosen Getriebe kann darin bestehen, den Anpressdruck zwischen den in Reibschluss stehenden Teilen des Getriebes für die Dauer des Belastungsstoßes zu erhöhen.

Bei dem Sensor zur Erfassung von Belastungsstößen kann es sich insbesondere um einen Sensor für das an den Rädern wirkende Drehmoment, für die Drehzahl der Räder oder für Winkelbeschleunigungen der Räder handeln.

Die Erfindung betrifft ferner ein Verfahren zur Unterdrückung des Schlupfes im stufenlosen Getriebe der Antriebsanordnung eines Kraftfahrzeugs bei Auftreten eines Belastungsstoßes. Das Verfahren ist dadurch gekennzeichnet, dass eine auf einen Belastungsstoß hinweisende Größe sensorisch erfasst und ausgewertet wird, und dass bei Detektion eines Belastungsstoßes, die über die genannte Größe erfolgt, eine für die Dauer des Belastungsstoßes wirksame und einen Schlupf am stufenlosen Getriebe verhindernde Gegenmaßnahme durchgeführt wird.

Wie bereits hinsichtlich der Antriebsanordnung erläutert wurde, hat ein solches Verfahren den Vorteil, bei Auftreten eines Belastungsstoßes gezielt und zeitlich begrenzt Maßnahmen zur Verhinderung eines Schlupfes am stufenlosen Getriebe durchzuführen und während des überwiegend stattfindenden normalen Betriebes das stufenlose Getriebe in Hinblick auf die normalen Belastungen optimal eingestellt zu betreiben.

Für die Gegenmaßnahme zur Verhinderung des Schlupfes am stufenlosen Getriebe gibt es verschiedene Möglichkeiten. Vorzugsweise besteht die Gegenmaßnahme in der Erzeugung eines den Belastungsstoß kompensierenden Drehmomentes. Dieses Drehmoment kann sowohl eingangsseitig als auch ausgangsseitig des Getriebes erzeugt werden.

Im Folgenden wird die Erfindung mit Hilfe der Figuren beispielhaft erläutert. Es zeigt:
Fig. 1 schematisch die für die Erfindung wesentlichen Komponenten im Kraftübertragungsweg eines Kraftfahrzeugs;
Fig. 2 vergrößert die Komponenten und Kräfte eines stufenlosen Getriebe vom Riementyp.

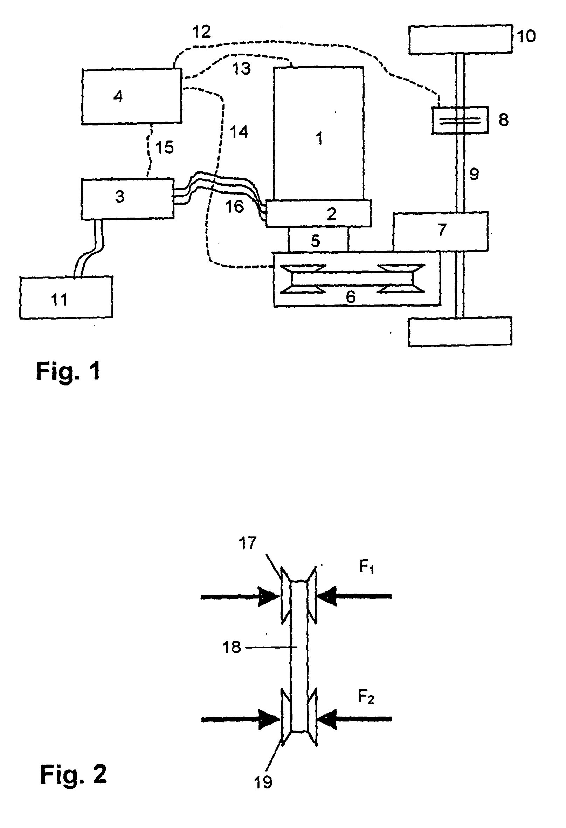

In Figur 1 sind die für die vorliegende Erfindung wesentlichen Komponenten des Kraftübertragungssystems eines Kraftfahrzeugs dargestellt. Die Erzeugung der Antriebskraft findet in dem Verbrennungsmotor 1 statt. Vom Motor 1 wird die Kraft zunächst durch eine Lichtmaschine 2 und eine Kupplung oder einen Drehmomentwandler 5 an den Eingang eines stufenlosen Getriebes 6 geleitet. Vom Ausgang des stufenlosen Getriebes 6 wird die Kraft dann weiter über das Achsgetriebe 7 an die Radachse 9 und von dort an die Räder 10 geleitet. Anders als in Figur 1 dargestellt könnte die Kupplung beziehungsweise der Drehmomentwandler 5 alternativ auch zwischen der Lichtmaschine 2 und dem Verbrennungsmotor 1 angeordnet sein.

Das stufenlose Getriebe 6, bei dem es sich im dargestellten Beispiel um ein Getriebe vom Riementyp handelt, ist in Figur 2 detaillierter dargestellt. Das Getriebe 6 enthält einen im Querschnitt keilförmigen Riemen 18, welcher über eine Antriebsriemenscheibe 17 und eine Abtriebsriemenscheibe 19 geführt ist. Die beiden Riemenscheiben 17, 19 bestehen dabei jeweils aus einander mit ihren Spitzen zugewandten Kegelstümpfen, wobei der axiale Abstand der Kegelstümpfe veränderbar ist. Bei einer Verkürzung des axialen Abstandes der Kegelstümpfe liegt der Riemen 18 radial weiter außen auf, so dass sich der effektive Radius der Riemenscheibe erhöht. Auf diese Weise kann durch die Veränderung der axialen Abstände der Kegelstümpfe das Übersetzungsverhältnis, welches dem Verhältnis der wirksamen Radien von Antriebsriemenscheibe 17 und Abtriebsriemenscheibe 19 entspricht, über einen weiten Bereich stufenlos eingestellt werden.

Bei dem Riemen 18 handelt es sich in der Regel um einen metallischen V-förmigen Riemen, ein Schubgliederband oder eine Kette. Die Kraftübertragung zwischen den Riemenscheiben 17, 19 und dem Riemen 18 findet durch Reibschluss zwischen den genannten Elementen statt. Die Höhe der Reibung wird dabei durch die in Figur 2 mit Pfeilen angedeuteten Kräfte F₁, F₂ bestimmt, die in Richtung der Drehachsen der Riemenscheiben wirken.

Um einen Verschleiß des Riemens 18 und der Riemenscheiben 17, 19 und ein daraus resultierendes Versagen zu verhindern, werden die Riemenscheiben zum Beispiel hydraulisch mit Anpressdrücken zur Erzeugung der Kräfte F₁, F₂ beaufschlagt. Der Anpressdruck wird dabei so hoch festgelegt, dass er die Kräfte überschreitet, welche zur Übertragung "normaler", das heißt störungsfreier Drehmomente notwendig wären. Diese sogenannte Überklemmung (over-clamping) ist in der Praxis erforderlich, um auch dann ein Gleiten und damit einen Schlupf des Riemens 18 zu verhindern, wenn er mit einem Drehmomentimpuls belastet wird. Ein Drehmomentimpuls kann das Ergebnis einer plötzlichen Drehbeschleunigung der zweiten Riemenscheibe 19 sein, welche z.B. auftritt, wenn das Fahrzeugrad eine Stufe überfährt.

Wenn die Drehbeschleunigung auf ein Trägheitsmoment trifft, erzeugt sie ein Drehmoment. In Abhängigkeit vom eingestellten Betriebszustand des stufenlosen Getriebes 6 wird das Trägheitsmoment des Motors 1 aus Sicht der zweiten Riemenscheibe 19 entsprechend dem Übersetzungsverhältnis erhöht oder verringert. Bei niedrig eingestelltem Übersetzungsverhältnis (Drehzahl der primären Riemenscheibe 17 größer als die der sekundären Riemenscheibe 19) erhöht sich das so gesehene Trägheitsmoment, während es sich bei hohem Übersetzungsverhältnis (Drehzahl der primären Riemenscheibe 17 kleiner als die der sekundären Riemenscheibe 19) verringert. Aus diesem Grunde wird insbesondere bei niedrigem Übersetzungsverhältnis und kleinen Fahrzeuggeschwindigkeiten, wie sie zum Beispiel während Parkmanövern auftreten, eine hohe Drehmomentspitze in das stufenlose Getriebe 6 eingeleitet, wenn zum Beispiel bei Auftreffen auf einen Bordstein eine entsprechende Radbeschleunigung-entsteht.

Bei den stufenlosen Getrieben nach dem Stand der Technik führt die Überklemmung dazu, dass die innere Reibung des Getriebes aufgrund der erhöhten Klemmkräfte entsprechend hoch ist. Mit der erfindungsgemäßen Lösung, welche nachfolgend erläutert wird, können dagegen Drehmomentspitzen im stufenlosen Getriebe vermieden werden. Dadurch kann die Überklemmung auf ein Minimum reduziert werden, was wiederum zu einer erheblichen Verbesserung der mechanischen Effizienz führt.

Bei der erfindungsgemäßen Lösung werden gemäß Figur 1 an der Radachse geeignete Sensoren 8 angeordnet. Hierbei kann es sich zum Beispiel um Sensoren für Drehmoment, Drehzahl oder (Winkel-)Beschleunigung handeln. Diese Sensoren 8 sind über Signalleitungen 12 mit einem Drehmomentregler 4 verbunden. Der Drehmomentregler 4 ist ferner über entsprechende Steuerleitungen 13, 14 und 15 mit dem Verbrennungsmotor 1, dem stufenlosen Getriebe 6 sowie der Leistungselektronik 3 für die Lichtmaschine 2 verbunden.

Der Drehmomentregler 4 kann aus den Sensorsignalen, die er über die Leitungen 12 empfängt, eine außergewöhnlich hohe Radbeschleunigung detektieren. Daraufhin kann der Regler 4 entsprechende Gegenmaßnahmen einleiten. Insbesondere kann er über die Leistungselektronik 3, die über elektrische Leitungen 16 mit der Lichtmaschine 2 verbunden ist, die Lichtmaschine 2 ansteuern. Dabei wird die Lichtmaschine 2 so aktiviert, dass sie alle auf der Eingangsseite des stufenlosen Getriebes 6 liegenden Trägheitsmomente einschließlich des Motors 1, der Lichtmaschine 2, der Kupplung 5 sowie der internen Zahnräder vor der primären Riemenscheibe 17 des stufenlosen Getriebes beschleunigt. Diese Beschleunigung kann mit einem solchen Drehmoment und in einer solchen Drehrichtung geschehen, dass die Summe der Trägheitsmomente nahezu Null ist. Mit anderen Worten wird der hinter dem Getriebe aufgetretene Belastungsstoß vor dem Getriebe künstlich erzeugt, so dass er das Getriebe quasi überspringen kann.

Es kann abgeschätzt werden, dass die Verarbeitung der sensorisch erfassten Beschleunigung, die Berechnungen des Drehmomentreglers 4 und die Regelung der Lichtmaschine auf einer kleineren Zeitskala stattfinden als die Eigenfrequenzen erster Ordnung der Trägheitsmomente über die Steifheit des Riemens des stufenlosen Getriebes. Der erfindungsgemäße Regelungsmechanismus ist daher schnell genug, um die gewünschte (Gegen-)Wirkung bei Belastungsstößen zu erzeugen.

## Patentansprüche

1. Antriebsanordnung für ein Kraftfahrzeug, enthaltend einen Verbrennungsmotor (1), ein im Kraftübertragungsweg vom Verbrennungsmotor zu den Rädern angeordnetes stufenloses Getriebe, sowie einen Drehmomentregler (4), der eingangsseitig mit mindestens einem vorzugsweise im Kraftübertragungsweg zwischen dem stufenlosen Getriebe (6) und den Rädern (10) angeordneten Sensor (8) zur Erfassung von Belastungsstößen verbunden ist, **dadurch gekennzeichnet, dass** der Drehmomentregler dahingehend ausgebildet ist, dass dieser bei Detektion eines Belastungsstoßes Mittel (2, 3) zur Verhinderung eines Schlupfes im stufenlosen Getriebe so ansteuert, dass der Belastungsstoß zu keinem Schlupf im stufenlosen Getriebe führt.

2. Antriebsanordnung nach Anspruch 1,
**dadurch gekennzeichnet, dass** die Mittel zur Verhinderung eines Schlupfes im stufenlosen Getriebe eine Lichtmaschine (2) sowie eine Ansteuerung (3) zur Krafterzeugung in der Lichtmaschine enthalten.

3. Antriebsanordnung nach Anspruch 2,
**dadurch gekennzeichnet, dass** die Lichtmaschine zwischein dem Verbrennungsmotor (1) und dem stufenlosen Getriebe (6) angeordnet ist.

4. Antriebsanordnung nach einem der Ansprüche 1 bis 3,
**dadurch gekennzeichnet, dass** der Sensor (8) ein Sensor für Drehmoment, Drehzahl und/oder Drehbeschleunigung ist.

5. Verfahren zur Unterdrückung des Schlupfes im stufenlosen Getriebe (6) einer Antriebsanordnung eines Kraftfahrzeugs bei Auftreten eines Belastungsstoßes, wobei eine auf einen Belastungsstoß hinweisende Größe sensorisch erfasst und ausgewertet wird, **dadurch gekennzeichnet, dass** bei Detektion eines Belastungsstoßes eine für dessen Dauer wirksame und den Schlupf am stufenlosen Getriebe verhindernde Gegenmaßnahme durchgeführt wird.

6. Verfahren nach Anspruch 5,
**dadurch gekennzeichnet, dass** die Gegenmaßnahme in der Erzeugung eines den Belastungsstoß kompensierenden Drehmomentes besteht.

## Claims

1. Drive arrangement for a motor vehicle, containing a combustion engine (1), a continuously variable transmission arranged in the power transmission path from the combustion engine to the wheels, and a torque controller (4), the input of which is connected to at least one sensor (8) for detecting sudden increases in load, preferably arranged in the power transmission path between the continuously variable transmission (6) and the wheels (10), **characterized in that** the torque controller is designed so that, when a sudden increase in load is detected, it controls means (2, 3) for preventing slip in the continuously variable transmission in such a way that the sudden increase in load does not lead to slip in the continuously variable transmission.

2. Drive arrangement according to Claim 1,
charcterized in that the means for preventing slip in the continuously variable transmission comprise a generator (2) and a control system (3) for producing power in the generator.

3. Drive arrangement according to Claim 2,
**characterized in that** the generator is arranged between the combustion engine (1) and the continuously variable transmission (6).

4. Drive arrangement according to any of Claims 1 to 3,
**characterized in that** the sensor (8) is a sensor for torque, rotational speed and/or angular acceleration.

5. Method for suppressing slip in the continuously variable transmission (6) of a drive arrangement of a motor vehicle when a sudden increase in load occurs, a variable that indicates a sudden increase in load being sensed and evaluated, **characterized in that**, when a sudden increase in load is detected, a countermeasure that is effective for the duration of the increase and prevents slip in the continuously variable transmission is carried out.

6. Method according to Claim 5,
**characterized in that** the countermeasure comprises producing a torque that compensates for the sudden increase in load.

## Revendications

1. Dispositif d'entraînement pour un véhicule automobile, comprenant un moteur à combustion interne (1), une transmission à variation continue disposée dans la trajectoire de transmission de force du moteur à combustion interne aux roues, ainsi qu'un régulateur de couple (4) qui est connecté du côté de l'entrée à au moins un détecteur (8) disposé de préférence dans la trajectoire de transmission de force entre la transmission à variation continue (6) et les roues (10) pour détecter des chocs de charge,
**caractérisé en ce que** le régulateur de couple est réalisé de telle sorte que celui-ci, lors de la détection d'un choc de charge commande des moyens (2, 3) pour empêcher un glissement dans la transmission à variation continue de telle sorte que le choc de charge ne conduise à aucun glissement dans la transmission à variation continue.

2. Dispositif d'entraînement selon la revendication 1,
**caractérisé en ce que** les moyens pour empêcher un glissement dans la transmission à variation continue comprennent un alternateur (2) ainsi qu'une commande (3) pour la production de force dans l'alternateur.

3. Dispositif d'entraînement selon la revendication 2,
**caractérisé en ce que** l'alternateur est disposé entre le moteur à combustion interne (1) et la transmission à variation continue (6).

4. Dispositif d'entraînement selon l'une quelconque des revendications 1 à 3,
**caractérisé en ce que** le détecteur (8) est un détecteur pour un couple, un régime et/ou une accélération de rotation.

5. Procédé pour supprimer le glissement dans la transmission à variation continue (6) d'un dispositif d'entraînement d'un véhicule automobile lors de l'apparition d'un choc de charge, dans lequel une grandeur relative à un choc de charge est détectée par un détecteur et est analysée,
**caractérisé en ce que** lors de la détection d'un choc de charge, on effectue une contre-mesure effective pendant toute sa durée et empêchant le glissement au niveau de la transmission à variation continue.

6. Procédé selon la revendication 5,
**caractérisé en ce que** la contre-mesure consiste à produire un couple compensant le choc de charge.
